# EUROPÄISCHE PATENTSCHRIFT

(11) **EP 0 668 124 B1**
(45) Veröffentlichungstag und Bekanntmachung des Hinweises auf die Patenterteilung: **29.07.1998**
(21) Anmeldenummer: 95101839.9
(22) Anmeldetag: 10.02.1995
(51) Int. Cl.: B23Q 3/18, B23B 31/16

(54) **Drehvorrichtung zum Lagern von Behältern**
Turning device for the storage of containers
Dispositif de rotation pour le stockage des conteneurs

(30) Priorität: 16.02.1994 DE 4404916
(43) Veröffentlichungstag der Anmeldung: 23.08.1995
(73) Patentinhaber: ANTON STEINECKER ENTWICKLUNGS GmbH & Co., D-85318 Freising (DE)
(72) Erfinder: Penger, Georg, D-85406 Oberappersdorf (DE)
(74) Vertreter: Grünecker, Kinkeldey, Stockmair & Schwanhäusser Anwaltssozietät

(56) Entgegenhaltungen:
- DE-B- 2 835 693
- DE-C- 160 045
- FR-A- 2 377 868
- GB-A- 1 048 935
- US-A- 2 225 273
- US-A- 2 830 170
- US-A- 3 881 715
- US-A- 4 688 612
- US-A- 4 770 400

## Beschreibung

Die Erfindung bezieht sich auf eine Drehvorrichtung zum Lagern von Behältern mit mindestens drei sternförmig verbundenen Trägerarmen.

Eine derartige bekannte Drehvorrichtung wird verwendet, um Behälter, insbesondere Rundbehälter, wie Sudpfannen oder dergl. während ihrer Fertigung beim Schweißen oder beim Polieren abzustützen. Wenn Behälter mit einem großen Durchmesser durch die bekannte Drehvorrichtung abgestützt werden sollen, so müssen Verlängerungen an die Trägerarme angeschraubt werden. Eine Anpassung an unterschiedliche Durchmesser der zu behandelnden Behälter ist also bei der bekannten Drehvorrichtung nachteiligerweise nicht in einfacher Weise möglich.

Die Aufgabe der Erfindung besteht somit darin, eine Drehvorrichtung der eingangs genannten Art so weiterzubilden, daß eine Anpassung an verschiedene Durchmesser der Behälter, insbesondere großer Durchmesser, in einfacher Weise möglich ist.

Zur Lösung dieser Aufgabe wird erfindungsgemäß vorgeschlagen, daß bei einer Drehvorrichtung der eingangs genannten Art die Trägerarme ausziehbar sind. Hierdurch werden die Trägerarme in ihrer Länge verstellbar, so daß sie durch Ausziehen in einfacher Weise an Behälter mit unterschiedlichem Durchmesser angepaßt werden können. Das bisher aufwendige Anschrauben von Verlängerungen entfällt. Um die Ausziehbarkeit der Trägerarme in benutzerfreundlicherweise zu gestalten, sieht die Erfindung vor, daß jeder Trägerarm aus einem Grundträger und einem Zusatzträger besteht, welcher verschiebbar und feststellbar an dem Grundträger gelagert ist. Hierbei ergibt sich der weitere Vorteil, daß der Zusatzträger nicht verlegt werden kann, da er immer am Grundträger angeordnet ist. Jeder Zusatzträger ist auf einem unteren Rollenlager und einem oberen Rollenlager abgestützt, wobei das untere Rollenlager an dem Grundträger und das obere Rollenlager an dem Zusatzträger angeordnet ist. Durch die beiden Rollenlager wird ein Abkippen oder Verkanten des Zusatzträgers vermieden und somit ein gleichmäßiges Ausziehen des Zusatzträgers mit geringem Kraftaufwand ermöglicht.

Damit die Trägerarme bei einem bestimmten vorgegebenen Durchmesser des Behälters auf die richtige Länge ausgefahren werden, sieht eine Weiterbildung der Erfindung vor, daß jeder Trägerarm zur Einstellung einer bestimmten Länge mit Markierungen versehen ist. Die Markierungen befinden sich sowohl auf dem Grundträger als auch auf dem Zusatzträger.

Wenn der Behälter beispielsweise mittels eines Kranes auf die Drehvorrichtung aufgesetzt wird, so muß dies zentriert erfolgen, damit beim anschließenden Drehen des Behälters die an den Behälter angreifenden Werkzeuge, wie beispielsweise Schweiß- oder Polierapparate, immer den gleichen Abstand von dem Behälter haben. Deshalb sieht eine weitere Ausgestaltung der Erfindung vor, daß an jedem Trägerarm mindestens ein Zentrierbügel für den Behälter vorgesehen ist. Vorteilhafterweise ist hierbei an einem äußeren Ende jedes Zusatzträgers ein Zentrierbügel angeordnet. Soll ein Behälter mit einem großen Durchmesser, welcher den Durchmesser des Grundträgers überschreitet, auf die Drehvorrichtung aufgebracht werden, so wird jeder Zusatzträger so weit ausgezogen, daß die an den äußeren Enden jedes Zusatzträgers angebrachten Zentrierbügel den Behälter in die Mitte der Drehvorrichtung zentrieren. Soll ein Behälter mit einem Durchmesser, welcher kleiner ist als der Durchmesser der. Grundträger, auf die Drehvorrichtung aufgebracht werden, so werden zweckmäßigerweise zusätzliche Zentrierbügel auf die Grundträger an den entsprechenden Positionen aufgesteckt. Mittels dieser aufgesteckten Zentrierbügel wird dann der Behälter auf die Mitte der Drehvorrichtung zentriert. Die Zentrierbügel können an denjenigen Positionen auf den Grundträgern aufgesteckt werden, an welchen sich die Markierungen befinden, wobei der Abstand der möglichen Positionen dem Abstand der Markierungen entspricht.

Vorteilhafterweise weist jeder Zentrierbügel eine Abstützfläche für den zu behandelnden Behälter auf, auf welche eine Unterkante des Behälters aufsetzt, wenn dieser auf die Drehvorrichtung aufgebracht wird. Die Abstützflächen sind zur Mitte der Drehvorrichtung hin nach unten geneigt, so daß bei einem weiteren Absenken des Behälters dieser entsprechend der Neigung der Abstützfläche zur Mitte der Drehvorrichtung hin verschoben wird und so in einfacher Weise zentriert werden kann.

Beim Elektroschweißen an dem Behälter ist es erforderlich, daß dieser geerdet ist. Deshalb sieht eine weitere Ausführungsform der Erfindung vor, daß an jedem Grundträger und Zusatzträger Masseleitungen zum Erden des Behälters angeordnet sind. Eine besonders einfache Konstruktion für die Masseleitungen ergibt sich, wenn die Masseleitungen als Schienen ausgebildet sind, auf welche der Behälter aufliegt. Da die Masseleitungen durch das Aufliegen des Behälters abgenutzt werden können, sind diese zweckmäßigerweise auswechselbar. Um separate Masseanschlüsse für jeden Trägerarm einzusparen, haben die Masseleitungen vorteilhafterweise einen gemeinsamen Masseanschluß.

Die Erfindung wird nachstehend anhand der Zeichnung näher erläutert. Die Zeichnung zeigt ein Ausführungsbeispiels der Erfindung. Hierbei stellen dar:

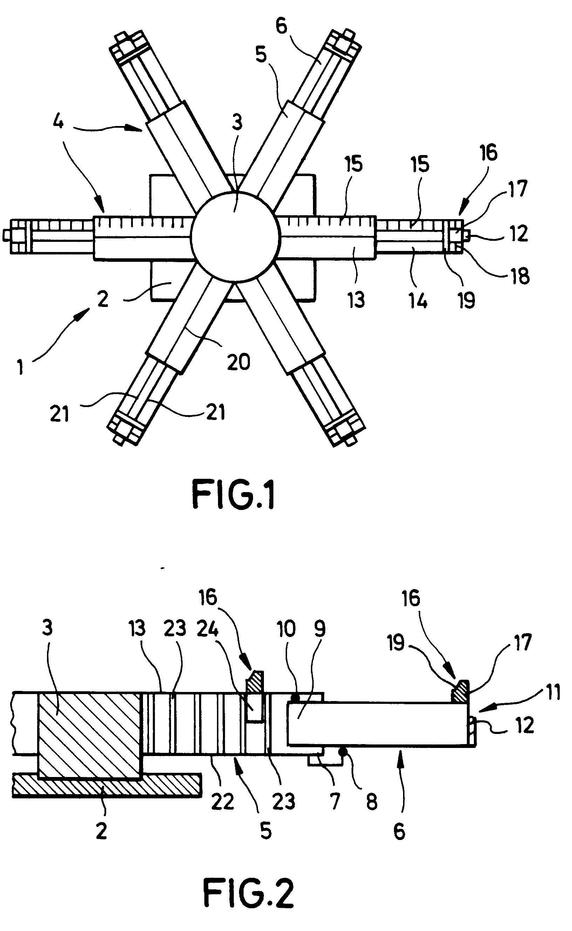

- Figur 1: eine Draufsicht auf die Drehvorrichtung und
- Figur 2: einen Querschnitt durch die Drehvorrichtung nach Figur 1, teilweise abgebrochen.

Die Drehvorrichtung 1 besteht aus einer Halterung 2, einer darin drehbar gelagerten Drehachse 3 und sechs Trägerarmen 4, welche sternförmig an der Trägerachse 3 angeordnet sind. Jeder Trägerarm 4 besteht aus einem Grundträger 5 und einem Zusatzträger 6, welcher teleskopartig innerhalb des Grundträgers 5 verschiebbar ist. Etwa am vorderen Ende 7 jedes Grundträgers 5 ist ein unteres Rollenlager 8 angebracht und am hinteren Ende 9 jedes Zusatzträgers 6 ist ein oberes Rollenlager 10 angeordnet. Über die beiden Rollenlager 8 und 10 wird der Zusatzträger 6 abgestützt und kann so in einfacher Weise aus dem Grundträger 5 herausgezogen bzw. hineingeschoben werden. Am äußeren Ende 11 des Zusatzträgers 6 befindet sich eine Feststellvorrichtung 12, mit welcher der Zusatzträger 6 in seiner Position fixiert werden kann.

Die Grundträger 5 und die Zusatzträger 6 weisen auf ihrer jeweiligen Oberseite 13 und 14 Markierungen 15 auf, mit deren Hilfe eine bestimmte Länge des gesamten Trägerarmes 4 eingestellt werden kann. Auf der Oberseite 14 jedes Zusatzträgers 6 nahe seinem äußeren Ende 11 ist weiterhin ein Zentrierbügel 16 angebracht, welcher der Zentrierung des Behälters auf der Drehvorrichtung dient. Der Zentrierbügel 16 besteht aus einem Grundkörper 17 mit Griffen 18 sowie einer an den Grundkörper 17 angebrachten Abstützfläche 19, welche schräg nach unten und zur Drehachse 3 hin verläuft. In ihrem unteren Teil verläuft die Abstützfläche 19 parallel zur Drehachse 3, so daß mittels dieser Abstützfläche 19 der Behälter so zentriert auf der Drehvorrichtung 1 liegt, daß die Behälterachse mit der Drehachse 3 übereinstimmt. Da der Behälter beim Elektroschweißen geerdet sein muß, sind auf der Oberseite 13 jedes Grundträgers 5 eine Masseleitung 20 und auf der Oberseite 14 jedes Zusatzträgers 6 zwei Masseleitungen 21 vorgesehen, auf welche sich der Behälter abstützen kann. Die Masseleitungen 21 sind mit der Masseleitung 20 elektrisch leitend verbunden. Außerdem sind alle Masseleitungen 20 der einzelnen Grundträger 5 an der Drehachse 3 über einen gemeinsamen nicht näher dargestellten Masseanschluß verbunden. Da die Masseleitungen 20 und 21 einem gewissen Verschleiß unterliegen, sind diese auswechselbar auf den Oberseiten 13 und 14 angebracht.

In ihrer Ausgangsposition sind die Zusatzträger 6 in die Grundträger 5 der Drehvorrichtung 1 eingeschoben. Soll ein kleinerer Behälter mit einem bestimmten Durchmesser, welcher kleiner als der Durchmesser der Grundträger 5 ist, auf die Drehvorrichtung aufgebracht werden, so wird bei den Markierungen 15 an jedem Grundträger 5 ein Zentrierbügel 16 aufgesteckt. Der Behälter wird dann auf die Drehvorrichtung herabgelassen und mittels der Zentrierbügel 16 auf der Drehvorrichtung 1 zentriert aufgebracht.

Soll ein großer Behälter aufgebracht werden, dessen Durchmesser den Durchmesser der Grundträger 5 überschreitet, so wird an jedem Zusatzträger 6 die Feststellvorrichtung 12 gelöst und jeder Zusatzträger 6 wird aus seinem entsprechenden Grundträger 5 bis auf die entsprechende Länge herausgezogen, welche sich durch die Markierungen 15 an dem Zusatzträger 6 ergibt. Anschließend wird der Zusatzträger 6 mittels der Feststellvorrichtung 12 fixiert. Der Behälter kann nun, wie vorstehend beschrieben, aufgebracht werden, wobei wiederum die an den Zusatzträgern 6 fest angebrachten Zentrierbügel 16 mittels der Abstützflächen 19 den Behälter zentrieren. Anschließend wird die Drehvorrichtung gedreht, um die entsprechenden Arbeiten, wie Schweißen oder Polieren an dem Behälter auszuführen. Sind diese Arbeiten beendet, so wird der Behälter wieder von der Drehvorrichtung abgenommen, die Feststellvorrichtung 12 wird gelöst, und jeder Zusatzträger 6 wird wieder in den Grundträger 5 eingefahren und über die Feststellvorrichtung 12 wieder fixiert. Somit ist ein Anpassen an unterschiedliche Behälterdurchmesser in einfacher Weise und in kurzer Zeit möglich. Da die Zusatzträger 6 in ihrer Ausgangsposition in dem Grundträger 5 eingefahren sind, wird auch kein zusätzlicher Lagerraum für die Zusatzträger 6 benötigt.

Die Oberseite 13 und eine Unterseite 22 des Grundträgers 5 ist mit Seitenstreben 23 verbunden, welche einen Abstand entsprechend der Rasterung der Markierungen 15 haben. Der Grundkörper 17 des Zentrierbügels 16 hat ein U-förmiges Profil, wobei Seitenflanken 24 des Grundkörpers 17 beim Aufstecken des Zentrierbügels 16 auf den Grundträger 5 zwischen die Seitenstreben 23 eingreifen und von diesen gehalten werden. Dadurch können die Zentrierbügel 16 beim Zentrieren des Behälters nicht nach außen kippen, da ein mögliches Kippmoment beim Auftreffen des Behälters auf die Abstützfläche 19 über die Seitenflanken 24 durch die Seitenstreben 23 aufgefangen wird.

## Patentansprüche

1. Drehvorrichtung zum Lagern eines Behälters, insbesondere Rundbehälters, mit mindestens drei sternförmig verbundenen Trägerarmen,
**dadurch gekennzeichnet**, dass
die Trägerarme (4) zur Verstellung ihrer Länge ausziehbar sind,
jeder Trägerarm (4) aus einem Grundträger (5) und einem Zusatzträger (6) besteht, welcher verschiebbar und feststellbar in dem Grundträger (5) gelagert ist, und
jeder Zusatzträger (6) auf einem unteren Rollenlager (8) und einem oberen Rollenlager (10) abgestützt ist, wobei das untere Rollenlager (8) an dem Grundträger (5) und das obere Rollenlager (10) an dem Zusatzträger (6) angeordnet ist.

2. Drehvorrichtung nach Anspruch 1,
**dadurch gekennzeichnet**, dass
jeder Trägerarm (4) zur Einstellung einer bestimmten Länge mit Markierungen (15) versehen ist.

3. Drehvorrichtung nach einem der vorhergehenden Ansrpüche,
**dadurch gekennzeichnet**, dass
an jedem Trägerarm (4) mindestens ein Zentrierbügel (16) für den Behälter vorgesehen ist.

4. Drehvorrichtung nach Anspruch 3,
**dadurch gekennzeichnet**, dass
an einem äußeren Ende (11) jedes Zusatzträgers (6) ein Zentrierbügel (16) angeordnet ist.

5. Drehvorrichtung nach einem der Ansprüche 3 und 4,
**dadurch gekennzeichnet**, dass
zusätzliche Zentrierbügel (16) auf die Grundträger (5) aufsteckbar sind.

6. Drehvorrichtung nach Anspruch 5,
**dadurch gekennzeichnet**, dass
die zusätzlichen Zentrierbügel (16) in einem Abstand aufsteckbar sind, welcher dem Abstand der Markierungen (15) entspricht.

7. Drehvorrichtung nach einem der Ansprüche 3 bis 6,
**dadurch gekennzeichnet**, dass
jeder Zentrierbügel (16) eine Abstützfläche (19) für den Behälter aufweist.

8. Drehvorrichtung nach einem der vorhergehenden Ansprüche,
**dadurch gekennzeichnet**, dass
an jedem Grundträger (5) und jedem Zusatzträger (6) Masseleitungen (20, 21) zum Erden des Behälters angeordnet sind.

9. Drehvorrichtung nach Anspruch 8,
**dadurch gekennzeichnet**, dass
die Masseleitungen (20, 21) als Schienen ausgebildet sind, auf welche der Behälter aufliegt.

10. Drehvorrichtung nach einem der Ansprüche 8 und 9,
**dadurch gekennzeichnet**, dass
die Masseleitungen (20, 21) auswechselbar sind.

11. Drehvorrichtung nach einem der vorhergehenden Ansprüche 8 bis 10,
**dadurch gekennzeichnet**, dass
die Masseleitungen (20, 21) einen gemeinsamen Masseanschluß haben.

## Claims

1. A rotary device for supporting a receptacle, in particular a round receptacle, comprising at least three support arms connected in star-shaped configuration,
**characterized in** that
said support arms (4) are extensible for adjusting the length thereof,
each of said support arms (4) consists of a basic support (5) and an additional support (6) which is displaceably and fixably supported in said basic support (5), and
each of said additional supports (6) is supported on a lower roller bearing (8) and an upper roller bearing (10), said lower roller bearing (8) being arranged on said basic support (5) and said upper roller bearing (10) on said additional support (6).

2. The rotary device according to claim 1,
**characterized in** that
each of said support arms (4) is provided with marks (15) for setting a specific length.

3. The rotary device according to any one of the preceding claims,
**characterized in** that
at least one centering bracket (16) is provided for said receptacle on each support arm (4).

4. The rotary device according to claim 3,
**characterized in** that
a centering bracket (16) is arranged on an outer end (11) of each additional support (6).

5. The rotary device according to any one of claims 3 and 4, **characterized in** that
additional centering brackets (16) are adapted to be attached onto said basic support (5).

6. The rotary device according to claim 5,
**characterized in** that
said additional centering brackets (16) are adapted to be attached at a spacing corresponding to the spacing of said marks (15).

7. The rotary device according to any one of claims 3 to 6, **characterized in** that
each of said centering brackets (16) comprises a support surface (19) for said receptacle.

8. The rotary device according to any one of the preceding claims, **characterized in** that
grounding lines (20, 21) are arranged on each basic support (5) and on each additional support (6) for grounding said receptacle.

9. The rotary device according to claim 8,
**characterized in** that
said grounding lines (20, 21) are formed as rails on which said receptacle rests.

10. The rotary device according to any one of claims 8 and 9,
**characterized in** that
said grounding lines (20, 21) are replaceable.

11. The rotary device according to any one of the preceding claims 8 to 10,
**characterized in**
that said grounding lines (20, 21) have a common grounding connection.

## Revendications

1. Dispositif rotatif destiné au logement d'un récipient, en particulier d'un récipient rond, comportant au moins trois bras de support reliés en forme d'étoile,
caractérisé en ce que
les bras de support (4) sont extensibles dans le but de régler leur longueur,
chaque bras de support (4) est constitué par un support de base (5) et par un support supplémentaire (6) qui est monté de manière à pouvoir coulisser et à être fixé dans le support de base (5), et
chaque support supplémentaire (6) s'appuie sur un palier à rouleaux inférieur (8) et sur un palier à rouleaux supérieur (10), le palier à rouleaux inférieur (8) étant disposé sur le support de base (5) et le palier à rouleaux supérieur (10) étant disposé sur le support supplémentaire (6).

2. Dispositif rotatif selon la revendication 1,
caractérisé en ce que
chaque bras de support (4) est muni de repères (15) pour le réglage d'une longueur déterminée.

3. Dispositif rotatif selon l'une quelconque des revendications précédentes,
caractérisé en ce que
on prévoit, sur chaque bras de support (4), au moins un étrier de centrage (16) pour le récipient.

4. Dispositif rotatif selon la revendication 3,
caractérisé en ce que
un étrier de centrage (16) est disposé à une extrémité externe (11) de chaque support supplémentaire (6).

5. Dispositif rotatif selon l'une quelconque des revendications 3 et 4,
caractérisé en ce que
des étriers de centrage supplémentaires (16) peuvent venir s'enficher sur le support de base (5).

6. Dispositif rotatif selon la revendication 5,
caractérisé en ce que
les étriers de centrage supplémentaires (16) peuvent venir s'enficher sur une distance qui correspond à la distance indiquée par' les repères (15).

7. Dispositif rotatif selon l'une quelconque des revendications 3 à 6,
caractérisé en ce que
chaque étrier de centrage (16) présente une surface d'appui (19) pour le récipient.

8. Dispositif rotatif selon l'une quelconque des revendications précédentes,
caractérisé en ce que
des conduits de mise à la masse (20, 21) pour la mise à la terre du récipient sont disposés sur chaque support de base (5) et sur chaque support supplémentaire (6).

9. Dispositif rotatif selon la revendication 8,
caractérisé en ce que
les conduits de mise à la masse (20, 21) sont réalisés en forme de rails sur lesquels s'appuie le récipient.

10. Dispositif rotatif selon l'une quelconque des revendications 8 et 9,
caractérisé en ce que
les conduits de mise à la masse (20, 21) sont interchangeables.

11. Dispositif rotatif selon l'une quelconque des revendications précédentes 8 à 10,
caractérisé en ce que les conduits de mise à la masse (20, 21) possèdent un raccord commun de mise à la masse.
